# EUROPEAN PATENT APPLICATION

(11) **EP 1 503 443 A1**
(43) Date of publication of application: **02.02.2005**
(21) Application number: 04254324.9
(22) Date of filing: 19.07.2004
(51) Int. Cl.: H01M 8/04, H01M 8/06, H01M 8/24

(54) **Method and system for collection of hydrogen from anode effluents**

(30) Priority: 28.07.2003 US 629066
(71) Applicant: Hewlett-Packard Development Company, L.P., Houston, TX 77070 (US)
(72) Inventor: Herman, Gregory S., Albany, OR 97321 (US); Mardilovich, Peter, Corvallis, OR 97330 (US); O'Neil, James, Corvallis, OR 97330 (US)
(74) Representative: Powell, Stephen David

(57) **Abstract**

A method and system are capable of collecting and/or using hydrogen obtained from an anode effluent stream, integrating hydrogen storage units (260), and/or are capable of supplying hydrogen and/or heat to a fuel cell stack (230). A fuel gas stream (10) is passed over an anode (40) to create an anode effluent stream (30), from at least part of which a hydrogen gas stream (60) is obtained.

## Description

The present invention generally relates to fuel cell systems.

Fuel cell technology is of particular commercial interest. Ongoing research and development continues to further the scope of potential uses of this technology. Research traditionally focuses on areas with the potential for advancement. Considerations related to fuel cell start-up, fuel cell efficiency, system efficiency, operating temperatures, portability, power capabilities and the like are all of great interest.

For example, operating temperatures may be relatively high requiring large amounts of energy to be added to the system during start-up. Thus, processes and systems that can achieve operational temperatures using less energy during start-up may increase the system efficiency. In addition, fuel cell systems and processes that have multiple uses are also of great interest. For example, start-up processes or components that may also be used for other operational enhancements, *i*.*e*., provide additional power during times of high load, may increase overall efficiency of the system. The subject matter described below may address one or more of these issues.

Disclosed herein are various embodiments related to fuel cells and/or fuel cell systems. Various embodiments comprise methods and systems capable of collecting and/or using hydrogen obtained from an anode effluent stream. Other embodiments comprise fuel cell methods and systems comprising a hydrogen storage unit. Still other embodiments comprise fuel cell methods and systems capable of supplying hydrogen and/or heat to a fuel cell stack.

For a detailed description of the embodiments of the invention, reference will now be made to the accompanying drawings in which:

Figure 1 shows a schematic diagram of hydrogen generation in accordance with one embodiment of the invention; and

Figure 2 is a schematic diagram of a fuel cell system in accordance with one embodiment of the invention.

Certain terms are used throughout the following description and claims to refer to particular system components. As one skilled in the art will appreciate, individuals and companies may refer to a component by different names. This document does not intend to distinguish between components that differ in name but not function. The terms used herein are intended to have their customary and ordinary meaning. The disclosure should not be interpreted as disclaiming any portion of a term's ordinary meaning. Rather, unless specifically stated otherwise, definitions or descriptions disclosed herein are intended to supplement, *i*.*e*., be in addition to, the scope of the ordinary and customary meaning of the term or phrase.

In addition, where words are used interchangeably, *e.g.*, "device, unit and mechanism" or "produced, generated and obtained," it is intended that these terms individually will have a broader meaning than their ordinary meaning that incorporates the full scope of each interchangeable term. Thus, nothing herein should be interpreted as disclaiming or disavowal of a term's scope unless specifically stated as otherwise.

The following discussion is directed to various embodiments of the invention. Although one or more of these embodiments may be preferred, the embodiments disclosed should not be interpreted, or otherwise used, as limiting the scope of the disclosure, including the claims, unless otherwise specified. In addition, one skilled in the art will understand that the following description has broad application, and the discussion of any embodiment is meant only to be exemplary of that embodiment, and not intended to intimate that the scope of the disclosure, including the claims, is limited to that embodiment.

Various embodiments of the invention may include methods and systems capable of collecting and/or using hydrogen obtained from an anode effluent stream. Other embodiments comprise fuel cell methods and systems comprising a hydrogen storage unit. Still other embodiments comprise fuel cell methods and systems capable of supplying hydrogen and/or heat to a fuel cell stack.

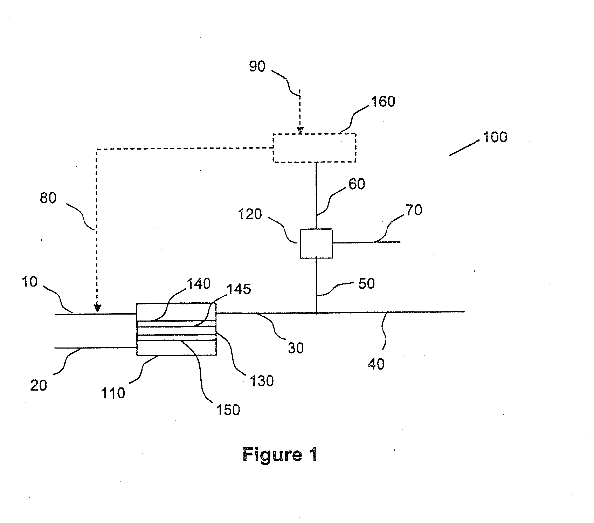

Figure 1 shows a schematic diagram of a fuel cell system 100 in accordance with one embodiment of the invention. Fuel cell system 100 includes a fuel cell 110 and a hydrogen generation unit 120. Fuel cell 110 may be comprised of a fuel cell stack 130 having at least one anode 140, electrolyte 145 and cathode 150. The particular type and design of the fuel cell stack 110 is not critical to the invention. For example, stack 110 may have a dual or single chamber design. Likewise, the anode 140, cathode 150 and electrolyte 145 materials are also not critical to the invention and may be formed from any suitable material, as desired and/or necessitated by a particular end use.

For example, suitable electrolyte materials may include, but are not limited to, cubic fluorite structure electrolytes, doped cubic fluorite electrolytes, proton-exchange polymer electrolytes, proton-exchange ceramic electrolytes, and mixtures thereof. Further, the electrolyte material may be yttria-stabilized zirconia (YSZ), samarium doped-ceria (SDC, CeₓSm_{y}O_{2-δ}), gadolinium doped-ceria (GDC, CeₓGd_{y}O_{2-δ}), LaₐSr_{b}Ga_{c}Mg_{d}O_{3-δ} and mixtures thereof.

Suitable anode materials may include, but are not limited to, nickel, platinum, Ni-YSZ, Cu-YSZ, Ni-SDC, Ni-GDC, Cu-SDC, Cu-GDC and mixtures thereof. Examples of suitable cathode materials may include, but are not limited to, silver, platinum and mixtures thereof; and samarium strontium cobalt oxide (SSCO, SmₓSr_{y}CoO_{3-δ}), barium lanthanum cobalt oxide (BLCO, BaₓLa_{y}CoO_{3-δ}), gadolinium strontium cobalt oxide (GSCO, GdₓSr_{y}CoO_{3-δ}), lanthanum strontium manganite (LaₓSr_{y}MnO3) and lanthanum strontium cobalt ferrite (La_{w}SrₓCo_{y}Fe_{z}O3) and mixtures thereof.

Hydrogen generation unit 120 may be any suitable device or mechanism capable of producing or separating hydrogen gas by either a physical or chemical mechanism. These types of devices are well known in the art and generally perform by either carrying out a reaction to produce hydrogen gas or separating existing hydrogen from a stream comprised of a mixture of chemicals including hydrogen. The particular device or mechanism used may depend upon the purity of hydrogen desired and/or necessitated by the end use. Suitable examples include, but are not limited to, hydrogen selective membranes, pressure swing adsorption, water gas shift reactors, steam reforming, autothermal reforming, pyrolysis, catalytic partial oxidation and the like.

In operation, the fuel cell system 100 may be used to obtain hydrogen by passing a fuel gas stream 10 over anode 140 and an oxygen containing gas stream 20 over cathode 150 to create an anode effluent stream 30. At least a portion of the anode effluent stream 30 may then be passed into the hydrogen generation device 120 via line 50 in order to obtain hydrogen gas stream 60. The hydrogen obtained may be hydrogen created from other gases in the anode effluent or hydrogen already existing in the anode feed either as hydrogen that passed over the anode unreacted from the anode feed or hydrogen produced in the fuel cell 110.

It should be appreciated that "anode effluent" is specifically defined herein as including effluent from an anode material whether or not the anode material is part of a single or dual chamber stack design. Thus, all embodiments described herein and shown in the Figures are specifically intended to include single and dual chamber fuel cell stacks regardless of how described or depicted. Accordingly, in Figure 1, anode effluent stream 30 is intended to include a gas stream from an anode chamber (if using a dual chamber design), or a gas stream from a fuel cell (if using a single chamber design or where one or more anode and cathode chamber effluents have been combined after leaving their respective chambers). In the case where a dual chamber design is used, a cathode effluent stream may also exit fuel cell 110 (not shown).

Any anode effluent not passed to hydrogen generation unit 120 may continue through line 40. All other gas passing through or produced in hydrogen generation unit 120 may exit through line 70 for further disposal, processing, recycling back through hydrogen generation unit 120 and/or combination with anode effluent at line 30 or 40.

The hydrogen gas stream 60 may then sent for further processing, recycled back into the fuel cell 110, a second fuel cell (not shown) or any other processing requiring a hydrogen gas source. In one embodiment of the invention, the hydrogen gas 60 may be sent to a hydrogen storage unit 160. Any hydrogen storage unit is sufficient. Suitable hydrogen storage devices include, but are not limited to, metal hydride beds, hydrogen sorption materials, compressed gas bottles and the like.

Hydrogen storage unit 160 may be used to supply hydrogen to the fuel cell system 100 or to other processes or locations. For example, in one embodiment of the invention, hydrogen may be introduced into the fuel cell 110 via line 80 either by connecting with line 10 (as shown) or by direct connection with fuel cell 110 (not shown). It should be appreciated that throughout this disclosure elements referred to as "connecting" (or some variation thereof) to various other elements are intended to mean connected through direct or indirect connections, e.g., other devices, pipes or connections are contemplated and within the scope of the term. Fuel cell 110 may use the hydrogen from line 80 during start-up, to increase fuel cell efficiency, during times of high load or as desired and/or necessitated by a particular end use. In another embodiment, hydrogen from line 80 may be fed to a second fuel cell (not shown) that may or may not be part of the same fuel cell system.

In one embodiment of the invention, as hydrogen is depleted from hydrogen storage unit 160 more hydrogen from hydrogen generation device 120 may replenish the hydrogen storage unit 160. For example, fuel cell 110 may use stored hydrogen from hydrogen storage unit 160 as part of the fuel cell start up process by passing the stored hydrogen over the anode. Subsequently, hydrogen obtained from the anode effluent via the hydrogen generation device 120 may be used to replenish the hydrogen storage unit 160.

The hydrogen storage unit 160 may also comprise additional lines, *e.g.*, line 90. In one embodiment of the invention, the hydrogen storage unit may contain an active material, e.g., a hydrogen oxidation catalyst or other catalytic type material, that promotes exothermic reactions when loaded with hydrogen. For example, metal hydride beds may contain support metal materials that result in an exothermic reaction with an oxygen containing gas. Suitable materials that may be used include, but are not limited to, Pd, Pt, Ru, Rh, Ni and the like, including mixtures thereof. Thus, an oxygen containing gas may be fed into the hydrogen storage unit 160 via line 90. The heat generated as a result of the exothermic reaction may then be used as a heat source. For example, the heat may be directed through line 80 to heat the entire fuel cell 110. Introducing a fuel into the hydrogen storage unit 160 and allowing combustion to take place may carry out additional heating. Once the fuel cell 110 has reached the desired temperature the oxygen containing gas and fuel gas feeds into the hydrogen storage unit 160 may be closed off. Hydrogen may then be replenished in the hydrogen storage unit 160 as desired and/or necessitated via hydrogen generation unit 120.

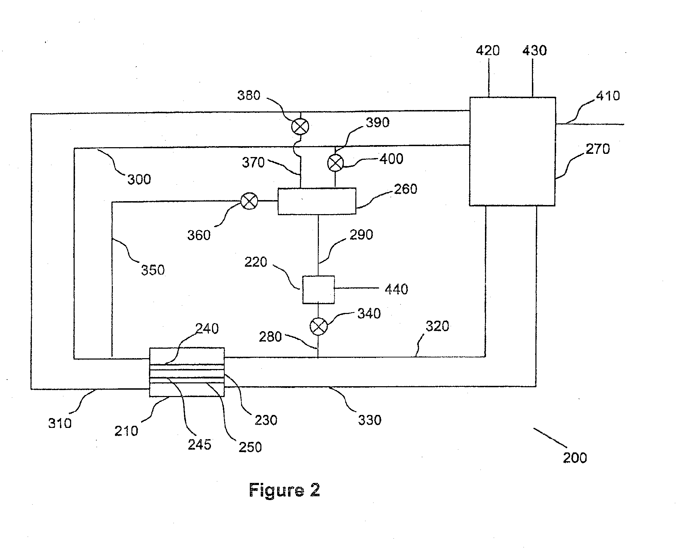

Figure 2 shows a schematic diagram of a fuel cell system 200 in accordance with one embodiment of the invention. Fuel cell system 200 includes a fuel cell 210, hydrogen generation unit 220, hydrogen storage unit 260 and temperature control unit 270. Fuel cell 210 may be comprised of a fuel cell stack 230 having at least one anode 240, electrolyte 245 and cathode 250. The considerations for fuel cell 210 and its components are the same as those identified above with respect to fuel cell 110 of Figure 1, *e.g.*, the fuel cell stack 230 may have a dual or single chamber design. Temperature control unit 270 allows for the heating of the reactant feeds, *i*.*e*., an oxygen containing gas 310 and fuel 300, and/or the removal of heat from the fuel cell 210 exhausts 320, 330. It should be appreciated that exhaust lines 320 and 330 may actually be a single exhaust line for fuel cells that either use a single chamber fuel cell stack design or combine the exhausts from a dual chamber fuel cell stack. Likewise, if a single chamber stack were used the reactant gas streams may be combined prior to or at exposure to the fuel cell stack 230. In addition, compounds other than those introduced by exhaust lines 320 and 330 may be combusted in unit 270 for a cleaner final exhaust 410.

Operation of fuel cell system 200 may be in accordance with the various embodiments described herein. For example, an oxygen containing gas may be passed over the anode 240 via line 300 and a fuel may be passed over the cathode 250 via line 310. Fuel cell products and unreacted gases exit the anode 240 and cathode 250 through lines 320 and 330, respectively. The exhaust lines 320 and 330 may be directed toward the temperature control unit 270 where the heat of the exhaust lines may be processed through a heat exchanger. The heat may be exchanged to heat the incoming oxygen containing gas 420 and fuel gas 430 feeds and cool the exhaust from lines 320 and 330.

By opening valve 340, at least a portion of the anode effluent may be sent to the hydrogen generation unit 220 via line 280 to produce a hydrogen gas that may be used as desired. As shown, the hydrogen gas obtained from hydrogen generation unit 220 is directed to hydrogen storage unit 260 via line 290. All other gas passing through or produced in hydrogen generation unit 220 may exit through line 440 for further disposal, processing, recycling back through hydrogen generation unit 220 and/or combination with anode effluent at line 320. The stored hydrogen may be used to aid in a subsequent start-up of fuel cell 210 via line 350 by opening valve 360. As described with respect to line 80 of Figure 1, line 350 , may introduce hydrogen into fuel cell 210 either by connecting with line 300 (as shown) or by direct connection with fuel cell 210 (not shown). In addition to or irrespective of using stored hydrogen at start-up, hydrogen may be fed to fuel cell 210 during operation as desired, *e.g.*, during times of high load. On shut down of the fuel cell system 200, valves 340 and 360 may be closed to maintain hydrogen in the storage chamber.

In another embodiment of the invention, fuel cell system 200 may contain lines 370 and 390 with valves 380 and 400. Line 370 may be used to pass an oxygen containing gas through the hydrogen storage unit 260 at start-up by opening valve 380. Hydrogen storage unit 260 may contain an active material that will promote the oxidation of hydrogen. As the oxygen containing gas is passed over the active material the exothermic formation of water will occur. Valve 360 may then be opened to direct the heat toward the fuel cell 210 to heat the entire system. Valve 400 may also be opened to promote combustion in the system and generate additional heat. The combustion operation may require that some hydrogen still be present in the hydrogen storage unit 260 and that sufficient heat already exits. Sufficient heat may be approximately 200°C. Once the fuel cell 210 reaches the desired temperature, *e.g.*, operating temperature, valves 380 and 400 may be closed.

The above discussion is meant to be illustrative of the principles and various embodiments of the present invention. Numerous variations and modifications will become apparent to those skilled in the art once the above disclosure is fully appreciated. It is intended that the following claims be interpreted to embrace all such variations and modifications.

## Claims

1. A method for obtaining hydrogen, comprising:
passing a fuel gas stream (10) over an anode (140) to create an anode effluent stream (30); and
obtaining a hydrogen gas stream (60) from at least a portion of the anode effluent stream (30).

2. The method according to claim 1 wherein the hydrogen gas stream (60) is obtained using a hydrogen membrane.

3. The method according to claim 1 wherein the fuel cell stack (130) comprises a dual chamber stack.

4. The method according to claim 1 wherein the fuel cell stack (130) comprises a single chamber stack.

5. The method according to claim 1 further comprising:
storing the hydrogen gas stream (60) in a hydrogen storage device (160).

6. A fuel cell system (220), comprising:
a fuel cell stack (230); and
a hydrogen storage unit (260); and
a hydrogen generation unit (220) configured to produce a hydrogen gas stream (290) from an anode effluent stream (320).

7. The system according to claim 6 wherein the hydrogen storage unit (260) comprises one or more mechanisms selected from the group consisting of metal hydride bed, hydrogen sorption material, and compressed gas bottle.

8. The system according to claim 6 wherein the hydrogen generation unit (220) comprises a hydrogen separation membrane.

9. The system according to claim 6 further comprising a temperature control unit (270).

10. The system according to claim 6 further comprising:
a hydrogen means for recycling hydrogen through the fuel cell stack (230) to be used for rapid startup.
